# EUROPEAN PATENT SPECIFICATION

(11) **EP 2 357 756 B1**
(45) Date of publication and mention of the grant of the patent: **11.10.2017**
(21) Application number: 08878217.2
(22) Date of filing: 24.11.2008
(51) Int. Cl.: H04L 12/18, H04M 11/08, H04L 29/06, H04H 20/61, H04W 72/00

(54) **A METHOD AND SYSTEM FOR SUPPORTING WIRELESS LOCAL AREA MULTIMEDIA BROADCASTING**
VERFAHREN UND SYSTEM ZUM UNTERSTÜTZEN VON DRAHTLOSEM LOKALNETZ-MULTIMEDIA-BROADCASTING
PROCÉDÉ ET SYSTÈME DE SUPPORT DE DIFFUSION MULTIMÉDIA LOCALE SANS FIL

(43) Date of publication of application: 17.08.2011
(73) Proprietor: ZTE Corporation, Shenzhen City, Guangdong Province 518057 (CN)
(72) Inventor: LV, Yong, Shenzhen City Guangdong Province 518057 (CN)
(74) Representative: Zerbi, Guido Maria
(86) International application number: PCT/CN2008/073174
(87) International publication number: WO 2010/057347

(56) References cited:
- WO-A1-2005/115030
- WO-A1-2006/004363
- CN-A- 1 357 199
- CN-A- 1 859 527
- CN-A- 1 996 866
- JP-A- 2003 189 007
- "Digital Video Broadcasting (DVB);Transmission System for Handheld Terminals (DVB-H)", ETSI EN 302 304V1.1.1(2004-11) , 1 November 2004 (2004-11-01), XP002733797, Retrieved from the Internet: URL:www.etsi.org/deliver/etsi_en/302300_30 2399/302304/01.01.01_60/en_302304v010101p. pdf [retrieved on 2014-12-16]

## Description

### Technical Field

The present invention relates to the wireless multimedia broadcast field, and particularly, to a method and system for supporting wireless local area multimedia broadcast.

### Background of the Related Art

Along with the popularization of the digital technology, the mobile television correlated technology become more and more mature, and terminals supporting the mobile television are being deployed in a large scale, such as the European Digital Video Broadcasting Handheld (DVBH) standard, the Chinese China Mobile Multimedia Broadcasting (CMMB) standard, the Japanese Integrated Services Digital Broadcasting-Terrestrial (ISDB-T) standard and the American MediaFlo standard. The mobile television is a low cost wireless multimedia solution, which should be applied in a large scale. Importantly, the reduction of the cost makes terminals supporting the mobile television to be used in a wide area.

In the other hand, some enterprise applications and industry applications are also required applying the multimedia broadcast. If the mobile television broadcast technology is used, the deployment of it will be very easy (which is only considered at the point of receiving terminals), and the cost will be quite low. However, there are some differences between these applications and the mobile television services, and the mobile television broadcast technology should not be copied directly. The differences between these applications and the mobile television services are mainly rest with the "local area network" characteristic of these applications, which means the mobile television mainly serves as a "wide area network" broadcast technology, and it provides a large quantity of subscribers with a mass of information in a large scale area, while the industry applications and enterprise applications of the multimedia broadcast are certain to be a "local area network" broadcast technology. The spatial zone of the broadcast is limited, the audiences are limited, and the broadcast contents are also limited. Therefore, how to apply mobile television technology into the enterprise applications and industry applications to implement the wireless local area multimedia broadcast and reduce the cost of separately deploying these applications are problems to be solved urgently.

An example of prior art method is described in WO 2006/004363 (SK TELECOM CO LTD [KR]; YOON JA-YOUNG[KAR]; YUN HONG-SEO[KR]; PARK HE) 12 January 2006 (2006-01-12), and relevant technology is also known from WO2005/115030 A1 (ELECTRONIC DATA SYST CORP [US]; GROSBACH ROY G [US]) 1 December 2005 (2005-12-01).

### Summary of the Invention

Directing toward above drawbacks, the present invention provides a method and system for supporting the local area multimedia broadcast, which can apply the mobile television technology into enterprise applications and industry applications to implement the wireless local area multimedia broadcast, and reduce the cost of separately deploying these applications as defined in the attached independent claims.

In order to achieve above aims, a method according to claim 1 for supporting wireless local area multimedia broadcast, applied in a wireless local area multimedia broadcast system is provided, and the method comprising:
when the system is working, acquiring audio and video signals requiring performing wireless local area multimedia broadcast, and transmitting the audio and video signals after the audio and video signals are encoded according to a transmitting power, a transmitting position and a mobile television technical standard; and
a terminal supporting mobile television choosing a receiving power corresponding to the transmitting power of the system according to the mobile television technical standard to receive the audio and video signals, and decoding the audio and video signals.

The method of the present invention further comprises:
before the system begins to work, sweeping frequencies in an area where the wireless local area multimedia broadcast is performed to determine the transmitting power and the transmitting position of the system.

Wherein, the system sets processing rules of encoding formats, parameters of an occupied physical channel and electronic service guidance information for the audio and video signals acquired by each signal acquisition device, and when the system is working, the system receives the audio and video signals acquired by each signal acquisition device, and encodes the audio and video signals according to the set processing rules, and then transmitting the encoded audio and video signals according to the transmitting power, transmitting position and mobile television technical standard.

Furthermore, in the method, the encoding is compressed encoding and multiplexed encoding.

Furthermore, in the method, the mobile television technical standard is a Digital Video Broadcasting Handheld standard, China Mobile Multimedia Broadcasting standard, Integrated Services Digital Broadcasting-Terrestrial standard or MediaFlo standard.

In order to achieve above aims, a system for supporting wireless local area multimedia broadcast is also provided according to claim 5 and the system includes a signal acquisition device, a server, a transmitting device and a terminal supporting mobile television; wherein
the signal acquisition device is used for acquiring audio and video signals requiring performing wireless local multimedia broadcast when the system is working, and sending the audio and video signals to the server;
the server is used for encoding the audio and video signals sent by the signal acquisition device, and then transmitting the encoded audio and video signals to the transmitting device;
the transmitting device is used for transmitting the encoded audio and video signals sent by the server according to a transmitting power, a transmitting position and a mobile television technical standard; and
a terminal supporting mobile television is used for choosing a receiving power corresponding to the transmitting power of the transmitting device according to mobile television technical standard to receive the transmitted audio and video signals, and decoding the audio and video signals.

In the system of the present invention, the transmitting device is further used for sweeping frequencies in an area where wireless local multimedia broadcast will be performed to determine the transmitting power and the transmitting position before the system begins to work.

Furthermore, in the system the server is further used for setting processing rules of coding formats, parameters of an occupied physical channel and electronic service guidance information for the audio and video signals acquired by each signal acquisition device, and when the system is working, receiving the audio and video signals acquired by each signal acquisition device, and encoding the audio and video signals according to the set processing rules, and then transmitting the encoded audio and video signals to the transmitting device.

Furthermore, in the system, the server performs compressed encoding and multiplexed encoding on the audio and video signals according to the set processing rules.

Furthermore, in the system the mobile television technical standard is a Digital Video Broadcasting Handheld standard, China Mobile Multimedia Broadcasting standard, Integrated Services Digital Broadcasting-Terrestrial standard or MediaFlo standard.

Comparing with the prior art, because the present invention use the current widely deployed mobile television technical standard (for example the Chinese CMMB standard, the American MediaFlo standard, the European DVB-H/T standard or the Japanese ISDB-T standard and so on), terminals can be existing commercial mobile television terminals. At the same time when the cost is reduced, the present invention can use multimedia information acquired in mobile television technical broadcast in a local area to implement wireless local area multimedia broadcast, and the present invention is particularly suitable for the situation where quantities of users exist in a local range (such as the scene of a conference hall, a stadium and so on).

### Brief Description of Drawings

FIG. 1 is a figure of the system structure according to the present invention;
FIG. 2 is a flow chart of the method according to the present invention.

### Preferred Embodiments of the Present Invention

In order to clarify the aims, technical schemes and advantages of the present invention, the present invention will be further described in detail in conjunction with accompanying figures and examples below. It should be understood that the examples described herein are only for explaining the present invention, and are not meant to limit the present invention.

The present invention uses existing mobile television technology systems (such as the DVBH or CMMB standards), and at the same time uses one or more small broadcast transmitting devices and existing mobile television terminals, to broadcast required multimedia information in a local area environment (for example in a meeting room and a stadium and gymnasium).

For example, the scenes the present invention can be applied in include:
1. an example of applying the present invention (taking the CMMB standard as an example) in a football match field. In this scene, the lines of sight of many audiences in the field are not so good, so the present invention can be used to broadcast pictures shot at different angles or different positions by cameras to supplement the eye shots of audiences. Different cameras occupy different broadcast television service channels, which are multiplexed by a server to be broadcast. And according to their own interests, audiences can use terminals supporting the mobile television to switch different services to watch the match.
2. an example of applying the present invention (taking the CMMB standard as an example) to broadcast voices in a large international conference hall. The speech of the speaker on the rostrum will be translated into different languages of different countries to broadcast in the hall, and different languages corresponds to different services, and according to the specification of the Electronic Service Guide (ESG), persons attending the conference can choose services corresponding to the their own target languages to listen.
3. an example of applying the present invention to implement the multimedia broadcast in an airplane. A traditional way is to deploy the closed circuit television in the airplane, and the shortcoming is that the circuitry is complex. When applying the present invention, terminals can use the wireless local multimedia broadcast, which does not only need circuitry connection, but also can deploy television broadcast services in normal.

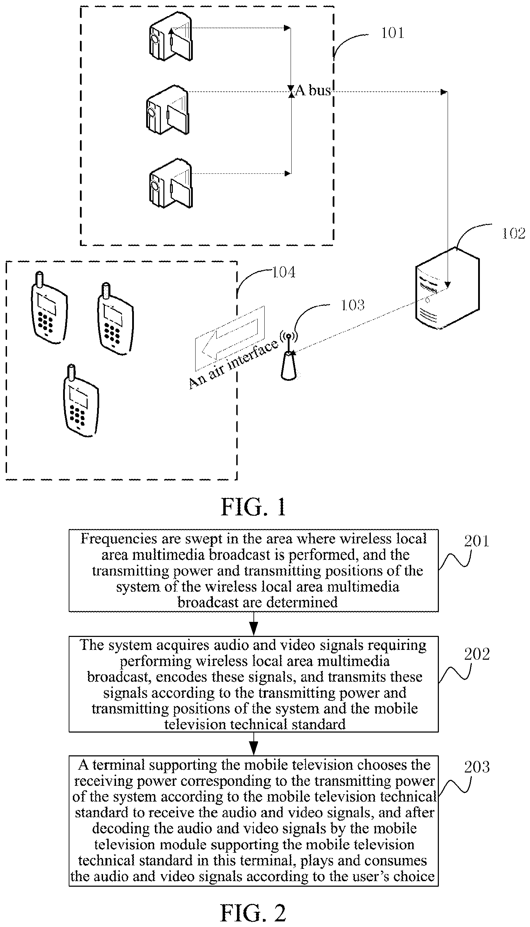

FIG. 1 is a figure of the system structure according to an example of the present invention, and this system mainly includes four parts, which are a signal acquisition device 101, a server 102, a transmitting device 103 and terminals supporting the mobile television 104 respectively; wherein
the signal acquisition device 101 is used for acquiring audio and video signals required for wireless local multimedia broadcast when the system is working;
the server 102 is used for encoding the audio and video signals sent by each signal acquisition device 101, and sending the encoded audio and video signals to the transmitting device 103;
the transmitting device 103 is used for transmitting the audio and video signals processed by the server 102 according to pre-deposited transmitting positions, the transmitting power determined by frequency sweeping and the mobile television technical standard;
the terminal supporting mobile television 104 is used for choosing receiving power corresponding to the transmitting power of the transmitting device 103 according to the mobile television technical standard to receive the audio and video signals transmitted by the transmitting device 103, and after decoding the audio and video signals by the mobile television module supporting the mobile television technical standard in the terminal, playing and consuming the audio and video signals according to users' choices.

Besides, the signal acquisition device 101 needs to be deployed according to the transmitting contents and the number and position of the signal acquisition device 101 is determined. And when the system is working, the signal acquisition device 101 acquires audio and video signals requiring performing wireless local multimedia broadcast.

Besides, the server 102 needs to set processing rules, such as the encoding format, parameters of the occupied physical channel and the ESG information and so on, of audio and video signals acquired by each signal acquisition device 101, and after connecting with each signal acquisition device 101 and receiving the audio and video signals acquired by each signal acquisition device 101, the server 102 carries out compressed encoding and multiplexed encoding on the audio and video signals according to configured processing rules, and then transmits the encoded audio and video signals to the transmitting device 103.

Besides, frequency sweeping for the positions of the wireless local multimedia broadcast in advance is for the purpose of determining the available frequencies of deployment systems and directly employing local universally deployed terminals supporting the mobile television. The way is to sweep the frequencies in the local layout band and choose unused frequencies in order to determine the transmitting power of the transmitting device 103.

And at the same time, determining the transmitting positions is for the purpose of avoiding the electromagnetic leak and the interference to the other districts. When the transmitting device 103 is deployed, the transmitting power should be determined accurately. The transmitting positions of the transmitting device 103 will affect the required transmitting power covering the whole audience, so the best positions of the transmitting device 103 should also be pre-determined. Sometimes, in the situation of the coverage range being larger, multiple transmitting devices 103 or multiple antennae can be used. A plurality of transmitting devices 103 or antennae are dispersedly deposited in different positions of the field, and transmitting power is allocated to each transmitting device 103 respectively.

Different from the broadcast system of the wide area network, the system in the present intention is localized. Firstly, the transmitting power of the transmitting device 103 in this system is lower (the transmitting power below 100dBm is lower transmitting power), as long as the required terminals supporting the mobile television in local area can receive the transmitting signals; and secondly, frequencies should be swept in the field to determine the frequency chosen for transmission, and this frequency cannot conflict with frequencies practically covering the public broadcast network.

FIG. 2 is a flow chart of the method according to the present invention. This method comprises the following steps.

Step 201, frequencies are swept in the area where wireless local area multimedia broadcast will be performed, and the transmitting power and transmitting positions of the system of the wireless local area multimedia broadcast are determined.

Step 202, this system acquires audio and video signals requiring performing wireless local area multimedia broadcast, encodes these signals, and transmits these signals according to the transmitting power and transmitting positions of the system and the mobile television technical standard.

Step 203, a terminal supporting the mobile television in the transmitting range of the system chooses the receiving power corresponding to the transmitting power of the system according to the mobile television technical standard to receive the audio and video signals, and after decoding the audio and video signals by the mobile television module supporting the mobile television technical standard in this terminal, plays and consumes the audio and video signals according to the user's choice.

Besides, in the step 201, the frequency sweeping in the area where wireless local area multimedia broadcast is performed is for the purpose of determining the available frequencies for deploying the system and directly employing local universally deployed terminals supporting the mobile television. The way is to sweep the frequencies in the local layout band and choose unused frequencies in order to determine the transmitting power of the system.

And at the same time, determining the transmitting position of the transmitting device of the system is for the purpose of avoiding the electromagnetic leak and the interference to the other districts. When the transmitting device is deployed, the transmitting power should be determined accurately. The transmitting positions of the transmitting device will also affect the required transmitting power covering the whole audience, so the best positions of the transmitting device should be pre-determined. Sometimes, in the situation of the coverage range being larger, multiple transmitting devices or multiple antennae can be used. A plurality of transmitting devices or antennae is dispersedly disposed in different positions of the field, and transmitting power is allocated to each transmitting device respectively.

Besides, the step 202 also comprises deploying signal acquisition devices according to transmitting contents, determining the number and positions of the signal acquisition devices, and the system acquires audio and video signals requiring performing wireless local multimedia broadcast through the signal acquisition device.

Besides, in the step 202, the system encodes these signals, and transmits these signals according to the transmitting power and transmitting positions of the system and the mobile television technical standard, which further comprises:
the system configuring processing rules, such as the encoding format, parameters of the occupied physical channel and ESG information and so on, of audio and video signals acquired by each signal acquisition device, and after the system is connected to each signal acquisition device, the system receiving the audio and video signals requiring performing wireless local area multimedia broadcast acquired by each signal acquisition device, and carrying out compressed encoding and multiplexed encoding the audio and video signals according to configured process rules, and then transmitting the encoded audio and video signals according to the transmitting power and transmitting positions of the system and the mobile television technical standard.

Besides, the mobile television technical standards in the examples can be the European DVBH standard, the Chinese CMMB standard, the Japanese ISDB-T standard or the American MediaFlo standard.

### Industrial Applicability

The present invention uses the current widely deployed mobile television technical standards (for example the Chinese CMMB standard, the American MediaFlo standard, the European DVB-H/T standard or the Japanese ISDB-T standard and so on), terminals can be existing commercial mobile television terminals. At the same time when the cost is reduced, terminals with little or no variations can be used to receive the information sent by the wireless local multimedia broadcast according to the method and system of the present invention. The present invention can use multimedia information acquired in mobile television technical broadcast in a local area to implement wireless local area multimedia broadcast, and the present invention is particularly suitable for the situation of quantities of users existed in a local range (such as the scene of a conference hall, a stadium and so on).

## Claims

1. A method for supporting wireless local area multimedia broadcast, applied in a wireless local area multimedia broadcast system comprising:
sweeping frequencies in an area where the wireless local area multimedia broadcast is performed to determine an available frequency, and a suitable transmitting power and transmitting position of a transmitting device (201),
acquiring audio and video signals requiring performing wireless local area multimedia broadcast(202),
transmitting the audio and video signals on said available frequency according to the transmitting power, the transmitting position and a mobile television technical standard after the audio and video signals are encoded(203); and
according to the mobile television technical standard, a terminal supporting mobile television choosing a receiving power corresponding to the transmitting power to receive said audio and video signals, and decoding the audio and video signals.

2. The method as claimed in claim 1, further comprising:
said system setting processing rules of encoding formats, parameters of an occupied physical channel and electronic service guidance information for the audio and video signals acquired by each signal acquisition device, and when said system is working, the system receiving the audio and video signals acquired by each signal acquisition device, and encoding the audio and video signals according to the set processing rules, and then transmitting the encoded audio and video signals on said available frequency according to said transmitting power, transmitting position and mobile television technical standard.

3. The method as claimed in claim 2, wherein,
said encoding is compressed encoding and multiplexed encoding.

4. The method as claimed in claim 1, wherein,
said mobile television technical standard is a Digital Video Broadcasting Handheld standard, Integrated Services Digital Broadcasting-Terrestrial standard or MediaFlo standard.

5. A system for supporting wireless local area multimedia broadcast, and the system including a signal acquisition device (101), a server (102), a transmitting device (103) and a terminal supporting mobile television (104) wherein:
said signal acquisition device is used for acquiring audio and video signals requiring performing wireless local multimedia broadcast when said system is working, and sending said audio and video signals to said server;
said server is used for encoding the audio and video signals sent by said signal acquisition device, and then transmitting the encoded audio and video signals to said transmitting device;
said transmitting device is used for sweeping frequencies in an area where wireless local multimedia broadcast will be performed to determine an available frequency, and a transmitting power and transmitting position of said transmitting device, and further used for transmitting the encoded audio and video signals sent by said server on said available frequency according to the transmitting power, the transmitting position and a mobile television technical standard; and
a terminal supporting mobile television is used for choosing a receiving power corresponding to the transmitting power of said transmitting device according to mobile television technical standard to receive the transmitted audio and video signals, and decoding the audio and video signals.

6. The system as claimed in claim 5, wherein,
said server is further used for setting processing rules of encoding formats, parameters of an occupied physical channel and electronic service guidance information for the audio and video signals acquired by each signal acquisition device, and when said system is working, receiving the audio and video signals acquired by each signal acquisition device, and encoding the audio and video signals according to the set processing rules, and then transmitting the encoded audio and video signals to said transmitting device.

7. The system as claimed in claim 6, wherein,
said server performs compressed encoding and multiplexed encoding on said audio and video signals according to the set processing rules.

8. The system as claimed in claim 5, wherein,
said mobile television technical standard is a Digital Video Broadcasting Handheld standard, Integrated Services Digital Broadcasting-Terrestrial standard or MediaFlo standard.

## Patentansprüche

1. Ein Verfahren zum Unterstützen von drahtlosen, lokalen Multimedia-Rundfunkübertragungen, das in einem System für drahtlose, lokale Multimedia-Rundfunkübertragungen angewendet wird, beinhaltend:
Durchlaufen von Frequenzen in einem Bereich, in dem die drahtlosen, lokalen Multimedia-Rundfunkübertragungen durchgeführt werden, um eine verfügbare Frequenz sowie eine geeignete Sendeleistung und eine geeignete Sendeposition einer Sendeeinrichtung zu ermitteln (201),
Erfassen von Audio- und Videosignalen, die das Durchführen drahtloser, lokaler Multimedia-Rundfunkübertragungen erfordern (202),
Senden der Audio- und Videosignale auf der verfügbaren Frequenz gemäß der Sendeleistung, der Sendeposition und einer technischen Mobilfernsehnorm, nachdem die Audio- und Videosignale codiert worden sind (203); und
gemäß der technischen Mobilfernsehnorm Auswählen, durch ein Mobilfernsehen unterstützendes Endgerät, einer mit der Sendeleistung korrespondierenden Empfangsleistung zum Empfangen der Audio- und Videosignale und Decodieren der Audio- und Videosignale.

2. Verfahren gemäß Anspruch 1, ferner beinhaltend:
Festlegen, durch das System, von Verarbeitungsregeln von Codierungsformaten, Parametern eines belegten physikalischen Kanals und Informationen zum elektronischen Programmführer für die durch jede Signalerfassungseinrichtung erfassten Audio- und Videosignale und, wenn das System arbeitet, Empfangen, durch das System, der durch jede Signalerfassungseinrichtung erfassten Audio- und Videosignale und Codieren der Audio- und Videosignale gemäß den festgelegten Verarbeitungsregeln und danach Senden der codierten Audio- und Videosignale auf der verfügbaren Frequenz gemäß der Sendeleistung, der Sendeposition und der technischen Mobilfernsehnorm.

3. Verfahren gemäß Anspruch 2, wobei
die Codierung eine Kompressionscodierung und eine Multiplexcodierung ist.

4. Verfahren gemäß Anspruch 1, wobei
die technische Mobilfernsehnorm eine Digital-Video-Broadcasting-Handheld-Norm, eine Integrated-Services-Digital-Broadcasting-Terrestrial-Norm oder eine MediaFlo-Norm ist.

5. Ein System zum Unterstützen von drahtlosen, lokalen Multimedia-Rundfunkübertragungen, wobei das System eine Signalerfassungseinrichtung (101), einen Server (102), eine Sendeeinrichtung (103) und ein Mobilfernsehen unterstützendes Endgerät (104) umfasst, wobei
die Signalerfassungseinrichtung zum Erfassen von Audio- und Videosignalen, die das Durchführen drahtloser, lokaler Multimedia-Rundfunkübertragungen erfordern, wenn das System arbeitet, und zum Übermitteln der Audio- und Videosignale an den Server verwendet wird;
der Server zum Codieren der durch die Signalerfassungseinrichtung übermittelten Audio- und Videosignale und danach zum Senden der codierten Audio- und Videosignale an die Sendeeinrichtung verwendet wird;
die Sendeeinrichtung zum Durchlaufen von Frequenzen in einem Bereich, in dem drahtlose, lokale Multimedia-Rundfunkübertragungen durchgeführt werden werden, verwendet wird, um eine verfügbare Frequenz sowie eine Sendeleistung und eine Sendeposition der Sendeeinrichtung zu ermitteln, und ferner zum Senden der durch den Server übermittelten, codierten Audio- und Videosignale auf der verfügbaren Frequenz gemäß der Sendeleistung, der Sendeposition und einer technischen Mobilfernsehnorm verwendet wird; und
ein Mobilfernsehen unterstützendes Endgerät zum Auswählen einer mit der Sendeleistung der Sendeeinrichtung korrespondierenden Empfangsleistung gemäß einer technischen Mobilfernsehnorm zum Empfangen der gesendeten Audio- und Videosignale und zum Decodieren der Audio- und Videosignale verwendet wird.

6. System gemäß Anspruch 5, wobei
der Server ferner zum Festlegen von Verarbeitungsregeln von Codierungsformaten, Parametern eines belegten physikalischen Kanals und Informationen zum elektronischen Programmführer für die durch jede Signalerfassungseinrichtung erfassten Audio- und Videosignale und, wenn das System arbeitet, zum Empfangen der durch jede Signalerfassungseinrichtung erfassten Audio- und Videosignale und zum Codieren der Audio- und Videosignale gemäß den festgelegten Verarbeitungsregeln und danach zum Senden der codierten Audio- und Videosignale an die Sendeeinrichtung verwendet wird.

7. System gemäß Anspruch 6, wobei
der Server an den Audio- und Videosignalen eine Kompressionscodierung und eine Multiplexcodierung gemäß den festgelegten Verarbeitungsregeln durchführt.

8. System gemäß Anspruch 5, wobei
die technische Mobilfernsehnorm eine Digital-Video-Broadcasting-Handheld-Norm, eine Integrated-Services-Digital-Broadcasting-Terrestrial-Norm oder eine MediaFlo-Norm ist.

## Revendications

1. Un procédé de prise en charge de diffusion multimédia locale sans fil, appliqué dans un système de diffusion multimédia locale sans fil comprenant :
le balayage de fréquences dans une zone où la diffusion multimédia locale sans fil est réalisée pour déterminer une fréquence disponible, et une puissance de transmission appropriée et la position de transmission d'un dispositif de transmission (201),
l'acquisition de signaux audio et vidéo nécessitant la réalisation d'une diffusion multimédia locale sans fil (202),
la transmission des signaux audio et vidéo sur ladite fréquence disponible selon la puissance de transmission, la position de transmission et une norme technique de télévision mobile après que les signaux audio et vidéo ont été codés (203) ; et
selon la norme technique de télévision mobile, le choix par un terminal prenant en charge la télévision mobile d'une puissance de réception correspondant à la puissance de transmission pour recevoir lesdits signaux audio et vidéo, et le décodage des signaux audio et vidéo.

2. Le procédé tel que revendiqué dans la revendication 1, comprenant en outre :
l'établissement par ledit système de règles de traitement de formats de codage, de paramètres d'un canal physique occupé et d'informations de guidage de service électronique pour les signaux audio et vidéo acquis par chaque dispositif d'acquisition de signaux, et lorsque ledit système fonctionne, la réception par le système des signaux audio et vidéo acquis par chaque dispositif d'acquisition de signaux, et le codage des signaux audio et vidéo selon les règles de traitement établies, et ensuite la transmission des signaux audio et vidéo codés sur ladite fréquence disponible selon lesdites puissance de transmission, position de transmission et norme technique de télévision mobile.

3. Le procédé tel que revendiqué dans la revendication 2, où,
ledit codage est un codage compressé et un codage multiplexé.

4. Le procédé tel que revendiqué dans la revendication 1, où,
ladite norme technique de télévision mobile est une norme de diffusion vidéonumérique DVB-H (Digital Video Broadcasting-Handheld), une norme de diffusion numérique à intégration de services ISDB-T (Integrated Services Digital Broadcasting-Terrestrial) ou une norme MediaFlo.

5. Un système pour prendre en charge une diffusion multimédia locale sans fil, et le système incluant un dispositif d'acquisition de signaux (101), un serveur (102), un dispositif de transmission (103) et un terminal prenant en charge la télévision mobile (104) où :
ledit dispositif d'acquisition de signaux est utilisé pour acquérir des signaux audio et vidéo nécessitant la réalisation d'une diffusion multimédia locale sans fil lorsque ledit système fonctionne, et envoyer lesdits signaux audio et vidéo audit serveur ;
ledit serveur est utilisé pour coder les signaux audio et vidéo envoyés par ledit dispositif d'acquisition de signaux, et ensuite transmettre les signaux audio et vidéo codés audit dispositif de transmission ;
ledit dispositif de transmission est utilisé pour balayer des fréquences dans une zone où une diffusion multimédia locale sans fil sera réalisée pour déterminer une fréquence disponible, et une puissance de transmission et une position de transmission dudit dispositif de transmission, et utilisé en outre pour transmettre les signaux audio et vidéo codés envoyés par ledit serveur sur ladite fréquence disponible selon la puissance de transmission, la position de transmission et une norme technique de télévision mobile ; et
un terminal prenant en charge la télévision mobile est utilisé pour choisir une puissance de réception correspondant à la puissance de transmission dudit dispositif de transmission selon la norme technique de télévision mobile afin de recevoir les signaux audio et vidéo transmis, et pour décoder les signaux audio et vidéo.

6. Le système tel que revendiqué dans la revendication 5, où,
ledit serveur est en outre utilisé pour établir des règles de traitement de formats de codage, de paramètres d'un canal physique occupé et d'informations de guidage de service électronique pour les signaux audio et vidéo acquis par chaque dispositif d'acquisition de signaux, et lorsque ledit système fonctionne, pour recevoir les signaux audio et vidéo acquis par chaque dispositif d'acquisition de signaux, et coder les signaux audio et vidéo selon les règles de traitement établies, et ensuite transmettre les signaux audio et vidéo codés audit dispositif de transmission.

7. Le système tel que revendiqué dans la revendication 6, où,
ledit serveur réalise un codage compressé et un codage multiplexé sur lesdits signaux audio et vidéo selon les règles de traitement établies.

8. Le système tel que revendiqué dans la revendication 5, où,
ladite norme technique de télévision mobile est une norme de diffusion vidéonumérique DVB-H (Digital Video Broadcasting-Handheld), une norme de diffusion numérique à intégration de services ISDB-T (Integrated Services Digital Broadcasting-Terrestrial) ou une norme MediaFlo.
